Europäisches Patentamt

European Patent Office

Office européen des brevets

(19)

(11) Veröffentlichungsnummer: **0 320 602 B1**

(12) **EUROPÄISCHE PATENTSCHRIFT**

(45) Veröffentlichungstag der Patentschrift: **18.12.91**

(21) Anmeldenummer: **88117618.4**

(22) Anmeldetag: **22.10.88**

(51) Int. Cl.⁵: **B60T 8/00**, B60T 17/22, B60T 7/20

(54) **Überlast-Warneinrichtung für eine Anhängerbremse.**

(30) Priorität: **18.12.87 DE 3742996**

(43) Veröffentlichungstag der Anmeldung:
**21.06.89 Patentblatt 89/25**

(45) Bekanntmachung des Hinweises auf die
Patenterteilung:
**18.12.91 Patentblatt 91/51**

(84) Benannte Vertragsstaaten:
**DE ES FR GB IT SE**

(56) Entgegenhaltungen:
**EP-A- 0 188 685**
**EP-A- 0 231 829**
**WO-A-87/05571**
**DE-A- 3 428 192**
**DE-A- 3 524 932**

(73) Patentinhaber: **WABCO Westinghouse Fahrzeugbremsen GmbH
Am Lindener Hafen 21 Postfach 91 12 80
W-3000 Hannover 91(DE)**

(72) Erfinder: **Feldmann, Joachim, Ing. (grad.)
Auf dem Papenberg 8
W-3057 Neustadt 2(DE)**
Erfinder: **Schult, Manfred, Dr.-Ing.
Carl-Zuckmayer-Strasse 4
W-3008 Garbsen 8(DE)**

(74) Vertreter: **Schrödter, Manfred
WABCO Westinghouse Fahrzeugbremsen
GmbH Am Lindener Hafen 21 Postfach 91 12
80
W-3000 Hannover 91(DE)**

## Beschreibung

Die Erfindung betrifft eine Überlast-Warneinrichtung für wenigstens eine in einer Anhängerbremsanlage angeordnete, durch Energiezufuhr betätigbare Anhängerbremse gemäß dem Oberbegriff des Patentanspruchs 1.

Eine Anhängerbremsanlage der in diesem Oberbegriff enthaltenen Art erhält von einem dem Anhänger vorausfahrenden Zugfahrzeug bei Energiezufuhr zu wenigstens einer Zugfahrzeugbremse ein dessen Bremsverzögerung abbildendes Verzögerungssignal und steuert die Energiezufuhr zu wenigstens einer durch Energiezufuhr betätigbaren Anhängerbremse so, daß der Anhänger die gleiche Bremsverzögerung wie das Zugfahrzeug erfährt. Deshalb stellt die Anhängerbremsanlage einen Regelkreis dar, dessen Regelgröße die Anhängerbremsverzögerung ist. Da gleiche Bremsverzögerung unter anderem gleichbleibenden Abstand zum Zugfahrzeug, gleichen Bremsweg sowie stets gleiche Geschwindigkeit von Zugfahrzeug und Anhänger bedeuten, sind zugleich wenigstens diese Größen Regelgrößen des Regelkreises. Eine derartige Anhängerbremsanlage ist aus der DE 27 52 641 A1 bekannt. Dort sind das Zugfahrzeug und der Anhänger formschlüssig miteinander verbunden. Bei einer Bremsbetätigung durch Energiezufuhr zu der Zugfahrzeugbremse strebt der Anhänger, auf das Zugfahrzeug aufzuschieben. Durch die Stärke der Energiezufuhr zu der Anhängerbremse bzw. durch Veränderung dieser Stärke stellt die Anhängerbremsanlage sicher, daß während der Bremsbetätigung die Kraft, die der Anhänger in seiner Aufschieberichtung auf das Zugfahrzeug ausübt, auf einen vorbestimmten Wert begrenzt wird. Diese Kraft liefert dieser Anhängerbremsanlage das Verzögerungssignal. Ihr Regelziel, die Angleichung der Anhängerbremsverzögerung an diejenige des Zugfahrzeugs als Sollwert, erreicht diese Anhängerbremsanlage durch Begrenzung der Kraft des Anhängers in seiner Aufschieberichtung auf den vorbestimmten Wert.

Eine Überlast-Warneinrichtung, die auch für wenigstens eine Anhängerbremse in einer derartigen Anhängerbremsanlage geeignet ist, ist aus der internationalen Patentanmeldung WO 84/00406 bekannt. Dieser Stand der Technik wird daher vorliegend zur Gattungsbildung herangezogen. In diesem Stand der Technik wird als Maß für die Belastung der Anhängerbremse die Temperatur in der Nähe der Bremstrommel oder der Bremsscheibe überwacht. Mittels eines Temperaturvergleichers wird beim Auftreten einer ungewöhnlich hohen Temperatur ein Warnkreis mit einer optischen und akustischen Warnanzeige geschlossen.

Nachteilig ist bei diesem Stand der Technik die Trägheit der Temperaturüberwachung. Die ungewöhnlich hohe Temperatur und damit die Belastung der Anhängerbremse kann schon ein schädliches Ausmaß angenommen haben, bevor infolge der erwähnten Trägheit die Warnanzeige erfolgt.

Der vorliegenden Erfindung liegt deshalb die Aufgabe zugrunde, eine Überlast-Warneinrichtung der eingangs genannten Art mit einfachen Mitteln derart zu verbessern, daß die Warnanzeige weitgehend verzögerungsfrei erfolgt.

Diese Aufgabe wird durch die in dem Patentanspruch 1 angegebene Erfindung gelöst. Weiterbildungen und vorteilhafte Ausgestaltungen der Erfindung sind in den Unteransprüchen angegeben.

Eine Anhängerbremse in einer Anhängerbremsanlage nach der bereits erwähnten DE 27 52 641 A1 weist im Vergleich zu einer Anhängerbremse in einer herkömmlichen Anhängerbremsanlage, wie sie aus der WABCO-Druckschrift "Anhänger-Bremsventil 971 002 Teil 2", Ausgabe 01.79, Seite 8, bekannt ist, eine Besonderheit auf. Bei derartigen Anhängerbremsanlagen, wie sie noch immer überwiegend im Einsatz sind, stellt der Führer des Fahrzeugzuges die Stärke der der Zugfahrzeugbremse und der Anhängerbremse zugeführten Energie ein. Im Falle von Druckmittel als Energie kann ihm zu diesem Zweck beispielsweise ein Motorwagen-Bremsventil in Verbindung mit einem Anhänger-Steuerventil und, wie dort dargestellt, einem Anhänger-Bremsventil zur Verfügung stehen. Der Stärke der zugeführten Energie entsprechend erzeugen die Zugfahrzeugbremse und die Anhängerbremse Bremskräfte, die ihrerseits den Wert der Bremsverzögerung des Fahrzeugzuges bestimmen. Gerät dabei die Anhängerbremse an die Grenze ihrer Belastbarkeit, so fällt bei gleichbleibender Stärke der zugeführten Energie ihre Bremskraft und damit die Bremsverzögerung des Fahrzeugzuges stark ab. Diese als "Fading" bezeichnete Erscheinung nimmt der Führer wahr. Er kann dann in der Regel die Fahrweise so ändern, daß die Anhängerbremse aus dem Grenzbereich ihrer Belastbarkeit zurückgeführt wird. Bei einer Anhängerbremsanlage nach der DE 27 52 641 A1 kann der Führer das "Fading" nicht wahrnehmen, da ohne sein Dazutun die Anhängerbremsanlage durch Steigerung der Stärke der der Anhängerbremse zugeführten Energie selbsttätig den mit dem "Fading" zusammenhängenden Bremskraftabfall ausgleicht. Die Erfindung bietet nun dem Führer auch für eine Anhängerbremse in einer derartigen Anhängerbremsanlage eine einfache Möglichkeit, deren "Fading" wahrzunehmen.

Auf ein "Fading" der Zugfahrzeugbremse braucht hier nicht eingegangen zu werden.

Im Sinne der Erfindung ist eine Zugfahrzeugbremse bzw. eine Anhängerbremse der jeweilige Bestandteil einer Zugfahrzeugbremsanlage bzw. einer Anhängerbremsanlage, der unmittelbar die Bremskraft erzeugt. Im Falle einer nicht verschleißfreien Bremse ist dies eine Baugruppe, die aus der Radbremse, der Zuspanneinrichtung und etwaigen dazwischen angeordneten Übertragungsgliedern besteht. Im Falle von Druckmittel als Energie besteht die Zuspanneinrichtung üblicherweise aus einem Bremszylinder. Demgegenüber ist unter Zugfahrzeugbremsanlage bzw. Anhängerbremsanlage jeweils das vollständige System einschließlich der Zugwagenbremse bzw. Anhängerbremse und einschließlich Energie-, Steuer- und Signalleitungen, Energiespeicher und Steuereinrichtungen zu verstehen.

Die Anhängerbremsanlage kann eine oder mehrere Anhängerbremsen enthalten. Im Falle mehrerer Anhängerbremsen kann eine Überlast-Warneinrichtung für jede Anhängerbremse oder eine solche Einrichtung für mehrere Anhängerbremsen oder für alle Anhängerbremsen gemeinsam vorgesehen sein. Alle diese Ausgestaltungsmöglichkeiten sollen im folgenden mit dem Begriff Anhängerbremse erfaßt werden.

Die Erfindung ist für jede Art Energie geeignet. Beispielhaft seien Druckmittel, auch solche mit Unterdruck, elektrische Energie oder menschliche Kraft erwähnt. Als Beispiele für die Gruppe der Druckmittel seien Druckluft und Hydraulikmittel und Kombinationen daraus erwähnt.

Die Stärken der der Zugfahrzeugbremse und/oder der Anhängerbremse zugeführten Energien können direkt erfaßt werden, beispielsweise, im Falle von Druckmittel, als Bremsdruck im Bremszylinder. Die genannten Stärken können aber auch indirekt erfaßt werden, beispielsweise in einer Steuereinrichtung, wozu auch eine Steuerleitung zählt. Im Falle von Druckmittel kommt insofern der Steuerdruck, insbesondere in einem Steuerventil oder einem Relaisventil oder in einer Steuerleitung, in Frage. Die Patentansprüche 2 bzw. 3 beschreiben diesbezügliche Ausgestaltungen der Erfindung.

Die Vergleichseinrichtung kann so ausgebildet sein, daß sie erst wirksam wird, wenn die der Anhängerbremse zugeführte Energie und damit auch das Anhänger-Energiesignal einen vorbestimmten Wert erreichen. Diese Ausbildung schließt Fehlfunktion bei einer geringeren Stärke der zugeführten Energie aus. Solche Fehlfunktionen können durch beabsichtigte und unbeabsichtigte funktionale Eigenarten von Steuergeräten der Anhängerbremsanlage hervorgerufen werden. Beispielhaft sei für den Fall von Druckmittel als Energie ein lastabhängiger Bremskraftregler mit Knickcharakteristik, d. h. ein solcher, erwähnt, der in einer Anfangsphase Druckmittel mit ungeregeltem Druck aussteuert.

Der Patentanspruch 5 gibt eine vorteilhafte Ausgestaltung der Mittel an, die in der Anhängerbremsanlage zu deren Ausbildung als Regelkreis für den Sollwert der Anhängerverzögerung dienen. Unter "Verbindung zwischen Zugfahrzeug und Anhänger" sind dabei sowohl eine Verbindung zwischen dem Zugfahrzeug und einem selbständigen Anhänger, also etwa eine Deichselverbindung, als auch eine Verbindung zwischen dem Zugfahrzeug und einem Auflieger, also etwa eine Sattelkupplung/Königszapfen-Verbindung, zu verstehen.

Der Patentanspruch 6 beschreibt eine vorteilhafte Auswertung des Warnsignals. Im Falle einer Ausgestaltung nach Patentanspruch 7 ist die Erfindung auf einfache Weise alternativ oder zusätzlich zu einer Überlast-Schutzeinrichtung ausgebaut.

Das Zugfahrzeug und der Anhänger haben in bekannter Weise jeweils eine Betriebsbremsanlage. Das Zugfahrzeug und/oder der Anhänger können darüber hinaus in bekannter Weise eine Hilfsbremsanlage aufweisen. Die Hilfsbremsanlage dient dann im Falle eines Defekts in der Betriebsbremsanlage der Aufrechterhaltung einer Notbremsfähigkeit. Das Zugfahrzeug kann zusätzlich zur Betriebsbremsanlage und, gegebenenfalls, zur Hilfsbremsanlage eine Dauerbremsanlage aufweisen. Die Dauerbremsanlage wird üblicherweise bei länger andauernden Bremsbetätigungen mit geringerem Bremskraft- bzw. Bremsverzögerungsbedarf, beispielsweise bei Gefällefahrten, eingesetzt. Bevorzugt werden als Dauerbremsanlagen verschleißfreie Bauarten wie eine Retarderanlage und ein Staudruckverlangsamer. Die Zugfahrzeugbremse einer Retarderanlage arbeitet beispielsweise nach dem Prinzip der Kreiselpumpe oder als Wirbelstrombremse. Ihre Bremskraft ist durch abgestufte Zuführung von (Steuer-) Energie, d. h. bei abgestuftem Zugfahrzeug-Energiesignal, in Stufen einstellbar. Ein Staudruckverlangsamer setzt als Zugfahrzeugbremse eine Drossel oder eine Klappe oder dergleichen in der Abgasleitung des Antriebsmotors ein; er ist in der Regel durch Zuführung von (Steuer-) Energie nur in eine Stufe schaltbar, d. h. nur ein- und ausschaltbar. Seine Bremskraft ist von der Motordrehzahl abhängig. Das bedeutet, daß der Staudruckverlangsamer bei gleichbleibendem Zugfahrzeug-Energiesignal veränderliche Bremskraft und damit veränderliche Bremsverzögerung erzeugt.

Alle diese Bauarten kommen, unter Berücksichtigung der für Dauerbremsanlagen gegebenen Einschränkung, als Zugfahrzeugbremsanlage bzw. Anhängerbremsanlage im Sinne der Erfindung in Betracht.

Die Erfindung ist auch in dem häufig vorkommenden Fall einsetzbar, daß eine Bauart Zugfahrzeugbremsanlage mit einer anderen Bauart Anhängerbremsanlage zusammenwirkt. Üblich ist beispielsweise, mit der Dauerbremsanlage des Zugfahrzeugs die Betriebsbremsanlage des Anhängers zu betätigen.

Ist im letztgenannten Fall die Dauerbremsanlage ein Staudruckverlangsamer, so ergibt sich aus der erwähnten Abhängigkeit zwischen dessen Bremskraft und Motordrehzahl eine Besonderheit. Mit fallender Motordrehzahl nimmt durch fallende Bremskraft auch die Bremsverzögerung (des Zugfahrzeugs und des gesamten Fahrzeugzuges) ab. Dementsprechend wird in der Anhängerbremsanlage die Energiezufuhr zu der Anhängerbremse gemindert, d. h. ein verringertes Anhänger-Energiesignal erzeugt. Dadurch verändert sich wegen der Konstanz des Zugfahrzeug-Energiesignals der Verhältniswert aus denselben mit der Möglichkeit von Fehlfunktionen als Folge. Es ist deshalb ratsam, das Zugfahrzeug-Energiesignal eines Staudruckverlangsamers entsprechend der Abhängigkeit zwischen der Motordrehzahl und der Bremskraft anzupassen.

Weitere Vorteile der Erfindung werden nachstehend anhand von in Zeichnungen dargestellten Ausführungsbeispielen angegeben.

Dabei gelten alle vorstehenden und folgenden Ausführungen entsprechend, wenn das Triebfahrzeug dem Anhänger als Schubfahrzeug folgt, wie beispielsweise beim Eisenbahn- und Schiffsverkehr üblich.

Unter durchgehender Verwendung gleicher Bezugszeichen für Elemente mit gleicher Funktion, ausgezogener Linien für Energieleitungen, gestrichelter Linien für Steuerleitungen und strichpunktierter Linien für Signalleitungen zeigen:

Fig. 1    schematisch einen Fahrzeugzug mit Anhängerbremsanlage mit Überlast-Schutz- und/oder -Warneinrichtung für eine Anhängerbremse,

Fig. 2    schematisch eine andere Ausgestaltung des Fahrzeugzuges nach Fig. 1

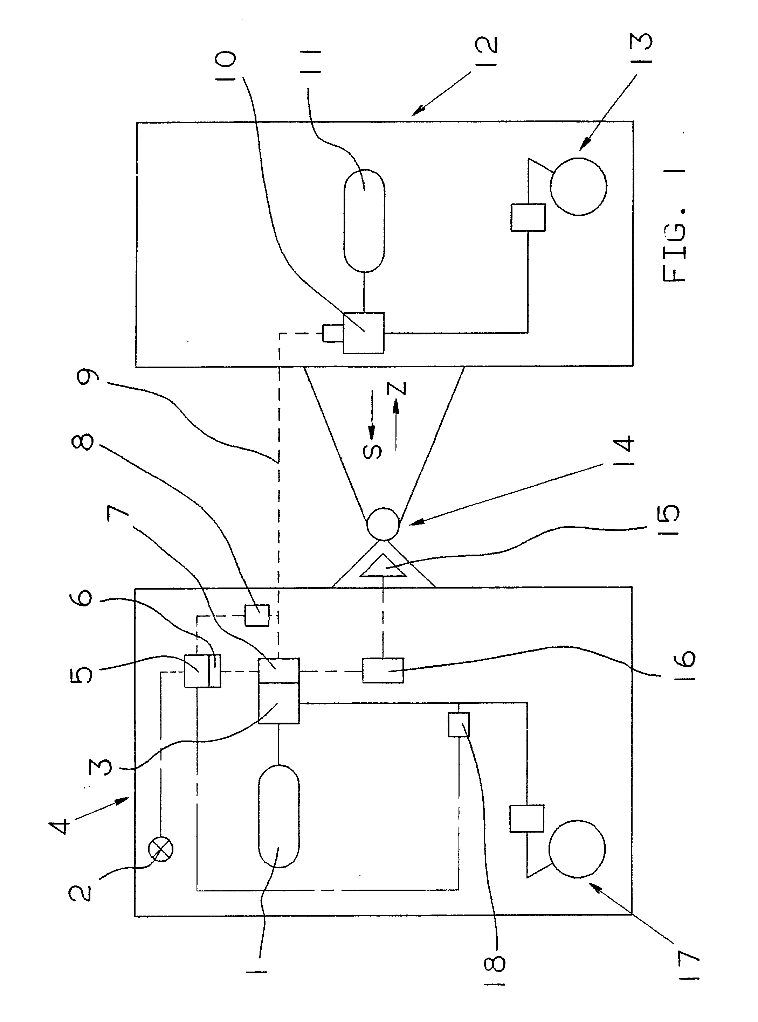

Der in Fig. 1 dargestellte Fahrzeugzug besteht aus einem Anhänger und einem diesem vorausfahrenden Zugfahrzeug, die generell mit (12) bzw. (4) bezeichnet sind.

Der Anhänger (12) enthält eine durch Energiezufuhr betätigbare Anhängerbremse (13). Diese ist in einer Anhängerbremsanlage (7, 10, 11, 13, 15, 16) angeordnet, welche aus einem Energievorrat (11), einem Anhängerbremsgerät (10) und der Anhängerbremse (13) im Anhänger (12) und einer Anhängersteuereinrichtung (7), einem Kraftsensor (15) sowie einem Steuergerät (16) im Zugfahrzeug (4) besteht.

Das Zugfahrzeug (4) enthält eine durch Energiezufuhr betätigbare Zugfahrzeugbremse (17). Diese ist Bestandteil einer Zugfahrzeugbremsanlage (1, 3, 17), die aus einem Energievorrat (1), einer Zugfahrzeugsteuereinrichtung (3) und der Zugfahrzeugbremse (17) besteht.

Die Zugfahrzeugsteuereinrichtung (3) und das Anhängerbremsgerät (10) sind nicht zwangsläufig als Einzelgeräte zu verstehen. Sie stehen vielmehr sinnbildlich für sämtliche an der Energiezufuhr zu der Zugfahrzeugbremse (17) bzw. der Anhängerbremse (13) beteiligten Einrichtungen wie beispielsweise Bremskraftregler, Relaisventile usw.

Die Anhängerbremsanlage (7, 10, 11, 13, 15, 16) bildet einen Regelkreis, dessen Regelgröße die Anhängerbremsverzögerung ist, deren Sollwert durch Energiezufuhr zu der Zugfahrzeugbremse (17), d. h. durch deren Betätigung, erzeugt wird. Mit anderen Worten: Die durch Betätigung der Zugfahrzeugbremse (17) erzeugte Bremsverzögerung des Zugfahrzeugs wird gemessen, und die Energiezufuhr zu der Anhängerbremse (13) wird so gesteuert, daß die Anhängerbremsverzögerung im wesentlichen der Bremsverzögerung des Zugfahrzeugs gleich ist.

Zu diesem Zweck wird eine Verbindung (14) zwischen Zugfahrzeug (4) und Anhänger (12) eingesetzt, die auf bekannte Art ausgebildet sein kann, vorliegend in Zugrichtung (Z) und Aufschieberichtung (S) des Anhängers (12) aber nur kraftschlüssig zu sein braucht. Der Kraftsensor (15) ist als die in Zugrichtung (Z) und Aufschieberichtung (S) des Anhängers (12) wirkende Kraft erfassender Sensor ausgebildet und entsprechend angeordnet. Er gibt ein der genannten Kraft entsprechendes Kraftsignal ab, welches dem Steuergerät (16) zugeführt wird. Das Steuergerät (16) steht ausgangsseitig mit der Anhängersteuereinrichtung (7) in Verbindung und erzeugt je nach seiner speziellen Ausbildung ein entsprechend gerichtetes Ausgangssignal, wenn das Kraftsignal einen vorbestimmten Wert annimmt oder ein Toleranzband um einen solchen zu verlassen droht. Dieser Wert kann je nach speziellen Eigenschaften des Fahrzeugzugs in Zugrichtung (Z) oder in Aufschieberichtung (S) angesetzt sein.

Die Anhängersteuereinrichtung (7) steht einerseits mit der Zugfahrzeugsteuereinrichtung (3) und andererseits über eine Steuerleitung (9) mit dem Anhängerbremsgerät (10) in Verbindung.

Die Anhängersteuereinrichtung (7) ist so ausgebildet, daß sie entsprechend dem Ausgangssignal des Steuergeräts (16) die Stärke der von ihr in die Steuerleitung (9) abgegebenen Steuerenergie steigert oder mindert.

Alle bisher erwähnten Einrichtungen sind für sich und in ihrem Zusammenwirken bekannt. Während aus diesem Grunde von einem näheren Eingehen auf die Einrichtungen selbst abgesehen wird, soll des besseren Verständnisses der Erfindung halber ihr Zusammenwirken noch einmal in Erinnerung zurückgerufen werden.

Zur Betätigung der Zugfahrzeugbremse (17) und der Anhängerbremse (13) wirkt der Führer des Fahrzeugzuges willkürlich mit einer Betätigungskraft bzw. einem Betätigungsweg auf die Zugfahrzeugsteuereinrichtung (3) ein. Diese führt daraufhin aus dem Energievorrat (1) der Zugfahrzeugbremse (17) Energie zu, deren Stärke von der Betätigungskraft bzw. dem Betätigungsweg abhängt. Gleichzeitig steuert die Zugfahrzeugsteuereinrichtung (3) mit ebenfalls von der Betätigungskraft bzw. dem Betätigungsweg abhängiger Energiestärke die Anhängersteuereinrichtung (7) an, die daraufhin ihrerseits eine entsprechende Steuerenergie über die Steuerleitung (9) an das Anhängerbremsgerät (10) abgibt, welches daraufhin aus dem Energievorrat (11) der Anhängerbremse (13) Energie von ebenfalls entsprechender Stärke zuführt. Der Kraftsensor (15) gibt währenddessen sein Kraftsignal an das Steuergerät (16) ab. Nimmt das Kraftsignal den vorbestimmten Wert an bzw. droht es, das Toleranzband um diesen Wert zu verlassen, so gibt das Steuergerät (16) an die Anhängersteuereinrichtung (7) ein Ausgangssignal ab, aufgrund dessen diese die von der Betätigungskraft bzw. dem Betätigungsweg abhängige Steuerenergie in der Energiesteuerleitung (9) steigert bzw. mindert, bis das Kraftsignal den vorbestimmten Wert einhält bzw. seine Neigung, das Toleranzband zu verlassen, verliert. Einer Neigung des Kraftsignals, zu hohe Werte in Aufschieberichtung (S) anzunehmen, d. h. einem Bremskraftabfall, wirkt die Anhängerbremsanlage (7, 10, 11, 13, 15, 16) also durch Steigerung der Energiezufuhr entgegen.

Über die bisher erwähnten Einrichtungen hinaus zeigt das Ausführungsbeispiel eine Überlast-Warneinrichtung (5, 8, 18) für die Anhängerbremse (13). Diese besteht aus einem ersten Sensor (18), einem zweiten Sensor (8) und einer Vergleichseinrichtung (5). Der erste Sensor (18) ermittelt die Stärke der der Zugfahrzeugbremse (17) zugeführten Energie und gibt ein dieser Stärke entsprechendes Zugfahrzeug-Energiesignal an die Vergleichseinrichtung (5) ab. Der zweite Sensor (8) ermittelt die Stärke der der Anhängerbremse (13) zugeführten Energie und gibt ein dieser Stärke entsprechendes Anhänger-Energiesignal an die Vergleichseinrichtung (5) ab. Die Vergleichseinrichtung (5) ist derart ausgebildet, daß sie aus den erwähnten Energiesignalen einen Verhältniswert bildet und ein Warnsignal abgibt, wenn sich der Verhältniswert mit einer vorbestimmten kritischen oder einer höheren Änderungsgeschwindigkeit ändert.

Es ist bekannt, daß Bremsen, so auch die Anhängerbremse (13), an der Grenze ihrer Belastbarkeit bei gegebener Stärke der zugeführten Energie einen starken Bremskraftabfall zeigen. In ihrer oben näher erläuterten Eigenschaft als Regelkreis für die Anhängerbremsverzögerung versucht die Anhängerbremsanlage (7, 10, 11, 13, 15, 16), einen solchen Bremskraftabfall der Anhängerbremse (13) durch eine starke Steigerung der zugeführten Energie auszugleichen. Den dieser Steigerung entsprechenden Anstieg des Anhänger-Energiesignals macht sich die Überlast-Warneinrichtung (5, 8, 18) zunutze.

Der erwähnte starke Bremskraftabfall wird allgemein als "Fading" bezeichnet. Das "Fading" der Anhängerbremse (13) wird auch durch den starken Anstieg des Anhänger-Energiesignals gekennzeichnet.

Zeigt die Anhängerbremse "Fading", so kann gleichzeitig die Zugfahrzeugbremse (17) entweder ebenfalls "Fading" zeigen oder noch normal arbeiten. Bei der erstgenannten Alternative kann wegen des Bremskraftabfalls der Zugfahrzeugbremse (17) der Bremskraftabfall der Anhängerbremse (13) ganz oder teilweise toleriert werden, so daß in diesem Falle die Stärke der der Anhängerbremse (13) zugeführten Energie nicht oder nur in geringerem Maße gesteigert wird, mit dem Ergebnis, daß der aus den Energiesignalen gebildete Verhältniswert unverändert bleibt oder sich mit einer geringeren als der kritischen Änderungsgeschwindigkeit ändert. In diesem Fall tritt also die Überlast-Warneinrichtung (5, 8, 18) nicht in Funktion. Dies ist aber auch nicht erforderlich, da der Führer des Fahrzeugzuges das "Fading" in Form nachlassender Bremsverzögerung wie bei einer herkömmlichen Anhängerbremsanlage wahrnimmt. Bei der zweiten Alternative hat der Anstieg des Anhänger-Energiesignals eine entsprechend starke Veränderung des aus den Energiesignalen gebildeten Verhältniswertes zur Folge, da ja das Zugfahrzeug-Energiesignal (wenigstens im wesentlichen) unverändert geblieben ist. Die Vergleichseinrichtung (5) gibt nun ihr Warnsignal ab, wenn die Änderungsgeschwindigkeit des Verhältniswertes den vorbestimmten kritischen Wert erreicht oder überschreitet. Ob der Verhältniswert sich dabei absolut in Richtung steigender Werte oder in Richtung fallender Werte ändert, hängt je nach Ausbildung der Vergleichseinrichtung (5) davon ab, ob das Anhänger-Energiesignal in den Zähler oder in den Nenner des Verhältniswertes eingeht.

Dies geschieht praktisch ohne Verzögerung. Die Überlast-Warneinrichtung (5, 8, 18) löst deshalb die Aufgabe, die Warnanzeige weitgehend verzögerungsfrei zu realisieren.

Das Ausführungsbeispiel zeigt als Auswerteeinrichtungen für das Warnsignal der Vergleichseinrichtung (5) beispielhaft eine optische oder akustische Warneinrichtung (2) und eine Bremsentlastungseinrichtung (6). Während die Warneinrichtung (2) das Warnsignal in eine optische oder akustische Anzeige umsetzt, ist die Bremsentlastungseinrichtung (6) derart ausgebildet, daß sie aus dem Warnsignal ein Steuersignal erzeugt, mittels dessen sie auf die Anhängersteuereinrichtung (7) im Sinne einer Begrenzung der in die Steuerleitung (9) abgebbaren Steuerenergie auf einen Höchstwert und/oder eine Reduzierung derselben einwirkt. Unter Zwischenschaltung der Anhängersteuereinrichtung (7) steuert die Bremsentlastungseinrichtung (6) bei Auftreten des Warnsignals die Energiezufuhr zur Anhängerbremse also derart, daß die Stärke der der Anhängerbremse zugeführten Energie auf einen Höchstwert begrenzt und/oder von dem vorhandenen Wert ausgehend reduziert wird. Die Überlast-Warneinrichtung (5, 8, 18) dient also auch als eine Überlast-Schutzeinrichtung für die Anhängerbremse (13).

In nicht dargestellter Weise können die Warneinrichtung (2) und die Bremsentlastungseinrichtung (6) auch alternativ vorgesehen sein. Es liegt auf der Hand, daß der Einsatzbereich der Bremsentlastungseinrichtung (6) wegen deren selbsttätigen Eingreifens in das Bremsgeschehen begrenzt ist, da dieses in vielen Einsatzfällen nicht hinnehmbar ist.

Im Detail arbeitet die Vergleichseinrichtung (5) unter Einsatz bekannter elektronischer Bauelemente wie folgt. Bei Betätigung der Zugfahrzeugsteuereinrichtung (3) wird ein integrierter Taktgenerator eingeschaltet. In dem von diesem bestimmten Takt fragt die Vergleichseinrichtung (5) den ersten Sensor (18) und den zweiten Sensor (8) ab und bildet aus deren Energiesignalen den Verhältniswert. Der am Beginn eines Taktes gebildete Verhältniswert wird in einem integrierten Speicher zwischengespeichert und mit dem am Ende des Takts gebildeten Verhältniswert verglichen. Weicht der am Ende des Takts gebildete Verhältniswert um ein eingespeichertes kritisches Maß oder mehr ab, so wird über einen integrierten Schalter ein Warnsignalkreis geschlossen. Entsprechend dem oben Gesagten kann die das Schließen des Warnsignalkreises bewirkende Abweichung der Verhältniswerte positiv oder negativ sein. Das hängt davon ab, ob die Vergleichseinrichtung (5) das Anhänger-Energiesignal in den Zähler oder in den Nenner des Verhältniswertes einsetzt. Die Vergleichseinrichtung kann auch so ausgebildet sein, daß der Taktgenerator erst eingeschaltet wird, wenn das Anhänger-Energiesignal einen vorbestimmten Wert erreicht. Mit dieser Ausgestaltung können etwaige weiter oben näher erläuterte Fehlfunktionen ausgeschlossen werden.

Die Vergleichseinrichtung (5) kann auch so ausgebildet sein, daß sie nach Abschluß einer Betätigung der Zugfahrzeugsteuereinrichtung (3) eine vorbestimmte Zeit lang, wie vorstehend im Detail beschrieben, weiter arbeitet. Damit ist es möglich, daß im Fall kurz aufeinander folgender Betätigungen (Stotterbremsung) der Beginn eines Taktes und sein Ende in verschiedene Bremsspiele fallen. Dadurch ist die Überlast-Warneinrichtung (5, 8, 18) auch bei solcher Art der Bremsbetätigung wirksam.

Die Vergleichseinrichtung kann auch so ausgebildet sein, daß sie die Differenz der Energiesignale am Ende und am Beginn eines Zeittakts ermittelt und bei Überschreiten einer kritischen Differenz den Warnsignalkreis schließt.

Im Ausführungsbeispiel mißt der erste Sensor (18) direkt die der Zugfahrzeugbremse (17) zugeführte Energie, während der zweite Sensor (8) die der Anhängerbremse (13) zugeführte Energie indirekt an der Steuerleitung (9) mißt. Mit anderen Worten: Der erste Sensor (18) ist zur Erfassung der Stärke der in der Zugfahrzeugbremse wirkenden Energie angeordnet, während der zweite Sensor (8) an eine der Bestimmung der Stärke der der Anhängerbremse (13) zugeführten Energie dienenden Steuereinrichtung angeordnet ist. Es liegt auf der Hand, daß der zweite Sensor (8) analog dem ersten Sensor (18), jedoch in der Anhängerbremsanlage, und der erste Sensor (18) analog dem zweiten Sensor (8), jedoch in der Zugfahrzeugbremsanlage angeordnet sein können.

Im Ausführungsbeispiel sind die der Anhängerbremsanlage (7, 10, 11, 13, 15, 16) zuzurechnenden Bestandteile Anhängersteuereinrichtung (7), zweiter Sensor (8), Kraftsensor (15) und Steuergerät (16) örtlich im Zugfahrzeug (4) angeordnet. Diese Anordnung hat den Vorteil, daß eine herkömmliche Anhängerbremsanlage ohne jede Änderung am Anhänger selbst einerseits zu einem Regelkreis, dessen Regelgröße die Anhängerbremsverzögerung ist, fortgebildet werden kann und andererseits dem Zusammenwirken mit der Erfindung zugänglich wird. Es liegt auf der Hand, daß unter Verzicht auf eine herkömmliche Anhängerbremsanlage deren vorliegend im Zugfahrzeug angeordnete Bestandteile ganz oder teilweise auch im Anhänger angeordnet werden können.

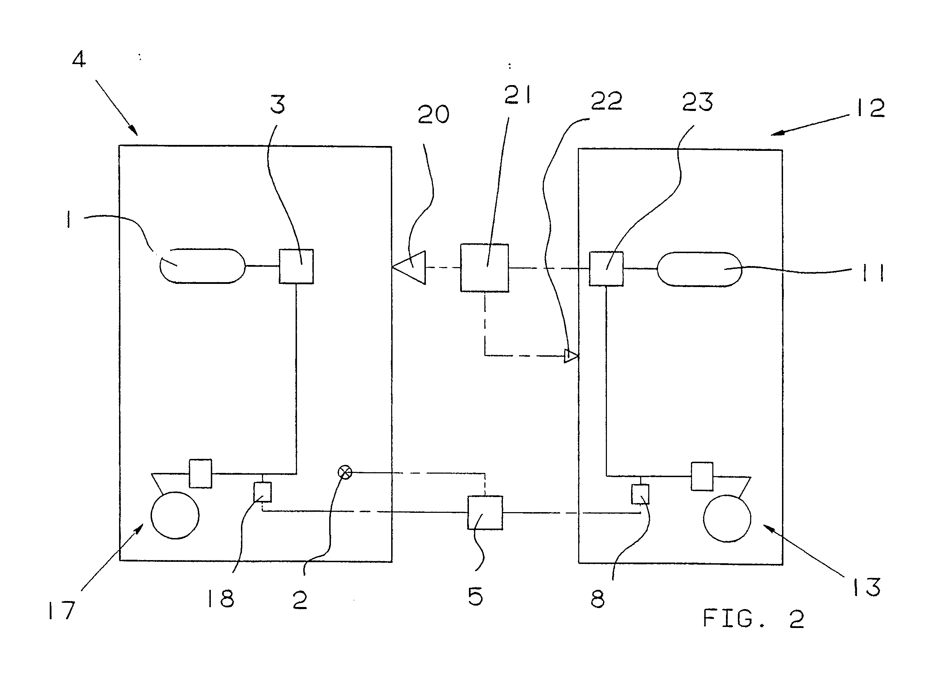

Das in Fig. 2 dargestellte Ausführungsbeispiel weicht von dem vorstehend beschriebenen in folgenden Punkten ab und entspricht jenem im übrigen.

Die Messung der Bremsverzögerung des Zugfahrzeugs (4) erfolgt mittels eines Verzögerungssensors (20), der ein diese Bremsverzögerung abbildendes Zugfahrzeug-Verzögerungssignal abgibt. Zur Erfassung der Anhängerbremsverzögerung ist ein Verzögerungssensor (22) vorgesehen, der ein diese abbildendes Anhänger-Verzögerungssignal abgibt. Die genannten Verzögerungssignale werden einer Auswerteeinrichtung (21) zugeführt, die ein Steuersignal abgibt, wenn das Anhänger-Verzögerungssignal überhaupt oder um einen vorbestimmten Wert von dem Zugfahrzeug-Verzögerungssignal abweicht. Welche dieser Alternativen zutrifft, hängt von der speziellen Ausgestaltung der Auswerteeinrichtung (21) ab.

Das hier mit (23) bezeichnete Anhängerbremsgerät nimmt das von der Auswerteeinrichtung (21) gelieferte Steuersignal auf und ist so ausgebildet, daß es die Stärke der der Anhängerbremse (13) aus dem Energievorrat (11) zugeführten Energie nach diesem Steuersignal steuert. Auf diese Weise wird die von der Anhängerbremse (13) erzeugte Bremskraft so gesteuert, daß die Anhängerbremsverzögerung, abgesehen von unvermeidbaren Toleranzen, der Bremsverzögerung des Zugfahrzeugs gleich ist.

Der zweite Sensor (8) der Überlast-Warneinrichtung (5, 8, 18) ist an der Energiezuleitung zu der Anhängerbremse (13) angeordnet und erfaßt, analog zum ersten Sensor (18), direkt die Stärke der dieser zugeführten Energie.

Während der Verzögerungssensor (20) am Zugfahrzeug und der Verzögerungssensor (22) am Anhänger angeordnet sein müssen, sind die Vergleichseinrichtung (5) und die Auswerteeinrichtung (21) örtlich zwischen dem Zugfahrzeug (4) und dem Anhänger (12) angeordnet. Damit soll zum Ausdruck gebracht werden, daß diese nach Belieben oder Zweckmäßigkeit im Zugfahrzeug (4) oder im Anhänger (12) angeordnet sein können. Der Fachmann erkennt, daß diese Anordnungsalternativen auch für das Anhängerbremsgerät (23) bestehen. Der Fachmann erkennt auch, daß das Anhängerbremsgerät (23) durch das Anhängerbremsgerät (10) des früheren Ausführungsbeispiels ersetzt werden kann, in welchem Falle es dieses über eine der Steuerleitung (9) entsprechende Leitung von einer der Anhängersteuereinrichtung (7) ähnelnden Anhängersteuereinrichtung gesteuert werden muß, welche das Steuersignal der Auswerteeinrichtung (21) verarbeitet.

Das Ausführungsbeispiel nach Fig. 2 bedarf der wenigstens kraftschlüssigen Verbindung (14) zwischen Zugfahrzeug und Anhänger des früheren Ausführungsbeispiels nicht. Von der Erfindung her kann deshalb vorliegend der Anhänger (12) dem Zugfahrzeug (4) ungezwungen folgen oder durch eine nur im Betrieb ohne Bremsbetätigung wirksame Verbindung, beispielsweise eine reine Zugverbindung, mit ihm verbunden sein.

Hinsichtlich der möglichen Bauarten der Zugfahrzeugbremse (17) und der Anhängerbremse (13) bzw. der Zugfahrzeugbremsanlage bzw. der Anhängerbremsanlage gelten für beide Ausführungsbeispiele die weiter oben insoweit aufgeführten Alternativen. Auch für den Fall des Vorhandenseins mehrerer Zugfahrzeugbremsen bzw. Anhängerbremsen in der Zugfahrzeugbremse bzw. in der Anhängerbremsanlage gelten die weiter oben insoweit gemachten Darlegungen.

Im übrigen gelten, so weit sich aus vorstehendem nichts anderes ergibt, die zum Ausführungsbeispiel nach Fig. 1 gemachten Ausführungen für dasjenige nach Fig. 2 entsprechend und umgekehrt.

## Patentansprüche

1. Überlast-Warneinrichtung für wenigstens eine in einer Anhängerbremsanlage angeordnete, durch Energiezufuhr betätigbare Anhängerbremse, wobei die Anhängerbremsanlage einen Regelkreis bildet, dessen Regelgröße die Anhängerbremsverzögerung ist, deren Sollwert in einem dem Anhänger vorausfahrenden Zugfahrzeug bzw. in einem dem Anhänger folgenden Schubfahrzeug durch Energiezufuhr zu wenigstens einer Zugfahrzeugbremse erzeugt wird,

   gekennzeichnet durch die Merkmale:

   a) Es ist ein erster Sensor (18) vorgesehen, der die Stärke der der Zugfahrzeugbremse (17) zugeführten Energie ermittelt und ein dieser Stärke entsprechendes, gegebenenfalls korrigiertes, Zugfahrzeug-bzw. Schubfahrzeug Energiesignal abgibt;
   b) es ist ein zweiter Sensor (8) vorgesehen, der die Stärke der der Anhängerbremse (13) zugeführten Energie ermittelt und ein dieser Stärke entsprechendes Anhänger-Energiesignal abgibt;
   c) es ist eine Vergleichseinrichtung (5) vorgesehen, der die genannten Energiesignale zugeführt werden;
   d) die Vergleichseinrichtung (5) ist derart ausgebildet, daß sie aus den Energiesignalen einen Verhältniswert bildet und ein Warnsignal abgibt, wenn die Änderungsgeschwindigkeit des Verhältniswertes gleich oder größer ist als ein vorbestimmter kritischer Wert.

2. Einrichtung nach Anspruch 1, dadurch gekennzeichnet, daß der erste Sensor (18) und/oder der zweite Sensor zur direkten Erfassung der Stärke der in der Zugfahrzeugbremse (17) bzw. in der Anhängerbremse (13) wirkenden Energie vorgesehen sind.

3. Einrichtung nach Anspruch 1, dadurch gekennzeichnet, daß der erste Sensor und/oder der zweite Sensor (8) an einer der Bestimmung der Stärke der der Zugfahrzeugbremse bzw. der Anhängerbremse (13) zugeführten Energie dienenden Steuereinrichtung (Steuerleitung (9)) angeordnet sind.

4. Einrichtung nach einem der vorhergehenden Ansprüche, dadurch gekennzeichnet, daß die Vergleichseinrichtung (5) so ausgebildet ist, daß sie erst wirksam wird, wenn das Anhänger-Energiesignal einen vorbestimmten Wert erreicht.

5. Einrichtung nach einem der vorhergehenden Ansprüche, wobei Zufahrzeug (4) und Anhänger (12) in Zugrichtung und Aufschieberichtung des Anhängers (12) wenigstens kraftschlüssig verbunden sind, gekennzeichnet durch:
   a) Es ist ein die in Zugrichtung (Z) und Aufschieberichtung (S) des Anhängers (12) wirkende Kraft erfassender Sensor, nachstehend Kraftsensor (15), vorgesehen, dessen der Kraft entsprechendes Kraftsignal einem der Anhängerbremsanlage (7, 10, 11, 13, 15, 16) zugeordneten Steuergerät (16) zugeführt wird;
   b) die Regelung der Anhängerbremsverzögerung erfolgt in der Weise, daß das Steuergerät (16) die Stärke der der Anhängerbremse (13) zugeführten Energie so steuert, daß das Kraftsignal einen vorbestimmten Wert annimmt oder ein Toleranzband um einen solchen Wert nicht verläßt.

6. Einrichtung nach einem der vorhergehenden Ansprüche, dadurch gekennzeichnet, daß mit der Vergleichseinrichtung (5) eine optische oder akustische Warneinrichtung (2) verbunden ist, die durch das Warnsignal steuerbar ist.

7. Einrichtung nach einem der vorhergehenden Ansprüche, dadurch gekennzeichnet, daß mit der Vergleichseinrichtung (5) eine Bremsentlastungseinrichtung (6) verbunden ist, die derart ausgebildet ist, daß sie bei Auftreten des Warnsignals die Energiezufuhr zur Anhängerbremse (13) derart steuert, daß die Stärke der der Anhängerbremse (13) zugeführten Energie auf einen Höchstwert begrenzt und/oder von dem vorhandenen Wert ausgehend reduziert wird.

8. Einrichtung nach einem der vorhergehenden Ansprüche, dadurch gekennzeichnet, daß wenigstens im Zugfahrzeug (4) oder im Anhänger (12) als Energie Druck wenigstens eines Druckmittels dient.

9. Einrichtung nach Anspruch 8, dadurch gekennzeichnet, daß als Druckmittel wenigstens Druckluft dient.

10. Einrichtung nach Anspruch 8, dadurch gekennzeichnet, daß als Druckmittel wenigstens ein Hydraulikmittel dient.

11. Einrichtung nach einem der Ansprüche 9 oder 10, dadurch gekennzeichnet, daß als Druckmittel eine Kombination von Druckluft und Hydraulikmittel dient.

12. Einrichtung nach einem der vorhergehenden Ansprüche, dadurch gekennzeichnet, daß wenigstens im Zugfahrzeug (4) oder im Anhänger (12) als Energie elektrische Energie dient.

13. Einrichtung nach einem der vorhergehenden Ansprüche, dadurch gekennzeichnet, daß wenigstens im Zugfahrzeug (4) oder im Anhänger (12) als Energie menschliche Kraft dient.

14. Einrichtung nach einem der vorhergehenden Ansprüche, dadurch gekennzeichnet, daß wenigstens die Zugwagenbremse (17) oder die Anhängerbremse (13) einer Betriebsbremsanlage des Zugwagens (4) bzw. des Anhängers (12) angehören.

15. Einrichtung nach einem der vorhergehenden Ansprüche, dadurch gekennzeichnet, daß wenigstens die Zugfahrzeugbremse (17) oder die Anhängerbremse (13) einer Hilfsbremsanlage des Zugwagens (4) bzw. des Anhängers (12) angehören.

16. Einrichtung nach einem der vorhergehenden Ansprüche, dadurch gekennzeichnet, daß die Zugfahrzeugbremse (17) einer Dauerbremsanlage angehört.

17. Einrichtung nach Anspruch 16, dadurch gekennzeichnet, daß die Dauerbremsanlage eine Retarderanlage ist.

18. Einrichtung nach Anspruch 16, dadurch gekennzeichnet, daß die Dauerbremsanlage ein Staudruckverlangsamer ist.

**Claims**

1. Overload warning device for at least one trailer brake arranged in a trailer brake system and operable by an energy supply, wherein the trailer brake system has a control circuit, the controlled variable for which is the trailer deceleration rate, the desired value of which is produced in a towing vehicle travelling in front of the trailer or in a shunting vehicle following the trailer by supply of energy to at least one towing vehicle brake, characterized by the following features:
   a) a first sensor (18) is provided, which ascertains the level of the energy supplied to the towing vehicle brake (17) and delivers the energy signal from the towing vehicle or shunting vehicle, optionally corrected, corresponding to that level;

b) a second sensor (8) is provided, which ascertains the level of the energy supplied to the trailer brake (13) and delivers a trailer energy signal corresponding to that level;

c) a comparator (5) is provided, to which the said energy signals are applied;

d) the comparator (5) is constructed so that it forms a ratio from the energy signals and delivers a warning signal when the rate of change in the ratio is equal to or greater than a predetermined critical value.

2. A device according to claim 1, characterized in that the first sensor (18) and/or the second sensor (8) are provided for ascertaining directly the level of the energy effective in the towing vehicle brake (17) and the trailer brake (13) respectively.

3. A device according to claim 1, characterized in that the first sensor (18) and/or the second sensor (8) are arranged on a control device (control line (9)) serving to determine the level of the energy supplied to the towing vehicle brake and the trailer brake respectively.

4. A device according to one of the preceding claims, characterized in that the comparator (5) is constructed so that it does not become effective until the trailer energy signal has reached a predetermined value.

5. A device according to one of the preceding claims, wherein the towing vehicle (4) and the trailer (12) are connected at least non-positively in the towing direction and push-on direction of the trailer (12), characterized by:

a) provision of a sensor, hereinafter referred to as the force sensor (15), ascertaining the force acting in the towing direction (Z) and the push-on direction (S) of the trailer (12) the force signal of which corresponding to the force is applied to a control unit (16) associated with the trailer brake system (7, 10, 11, 13, 15, 16);

b) the automatic control of the trailer braking deceleration is effected by the control unit (16) which controls the level of the energy supplied to the trailer brake (13) so that the force signal assumes a predetermined value or does not depart from a tolerance range around that value.

6. A device according to one of the preceding claims, characterized in that connected to the comparator (5) there is a visual or acoustic warning device (12) which is controllable by the warning signal.

7. A device according to one of the preceding claims, characterized in that connected to the comparator (5) there is a brake relief device (6) which is constructed so that, on the appearance of the warning signal, it controls the energy supply to the trailer brake (13) so that the level of the energy supplied to the trailer brake (13) is restricted to a maximum value and/or is reduced, starting from the existing value.

8. A device according to one of the preceding claims, characterized in that the pressure of at least one pressure medium serves as the energy at least in the towing vehicle (4) or in the trailer (12).

9. A device according to claim 8, characterized in that at least compressed air serves as the pressure medium.

10. A device according to claim 8, characterized in that at least an hydraulic medium serves as the pressure medium.

11. A device according to one of claims 9 or 10, characterized in that a combination of compressed air and hydraulic medium serves as the pressure medium.

12. A device according to one of the preceding claims, characterized in that at least in the towing vehicle (4) or in the trailer (12) electrical energy serves as the energy.

13. A device according to one of the preceding claims, characterized in that at least in the towing vehicle (4) or in the trailer (12) human power serves as the energy.

14. A device according to one of the preceding claims, characterized in that at least the towing vehicle brake (17) or the trailer brake (13) belongs to a service brake system of the towing vehicle (4) or the trailer (12).

15. A device according to one of the preceding claims, characterized in that at least the towing vehicle brake (17) or the trailer brake (13) belongs to an auxiliary brake system of the towing vehicle (4) or the trailer (12).

16. A device according to one of the preceding claims, characterized in that the towing vehicle brake (17) belongs to a sustained-action brake system.

17. A device according to one of the preceding claims, characterized in that the sustained-action brake system is a retarder system.

18. A device according to one of the preceding claims, characterized in that the sustained-action brake system is a back pressure retarder.

**Revendications**

1. Dispositif d'avertissement de surcharge pour au moins un frein de remorque agencé dans une installation de freinage de remorque et actionnable par amenée d'énergie, l'installation de freinage de remorque formant une boucle de régulation dont la grandeur réglée est la décélération de freinage de la remorque et dont la valeur de consigne est produite dans un véhicule tracteur précédant la remorque, ou encore dans un véhicule pousseur suivant la remorque, par amenée d'énergie à au moins un frein du véhicule tracteur, caractérisé par les caractéristiques : .
   a) il est prévu un premier capteur (18) qui détermine l'intensité de l'énergie amenée au frein (17) du véhicule tracteur et qui fournit un signal d'énergie de véhicule tracteur ou, selon le cas, de véhicule pousseur, correspondant à cette intensité et éventuellement corrigé;
   b) il est prévu un deuxième capteur (8) qui détermine l'intensité de l'énergie amenée au frein de remorque (13) et fournit un signal d'énergie de remorque correspondant à cette intensité;
   c) il est prévu un dispositif comparateur (5) auquel lesdits signaux d'énergie sont amenés;
   d) le dispositif comparateur (5) est conçu-réalisé de manière à former une valeur de rapport à partir des signaux d'énergie et à émettre un signal d'avertissement si la vitesse de variation de la valeur de rapport est égale ou supérieure à une valeur critique prédéterminée.

2. Dispositif selon revendication 1 caractérisé par le fait que le premier capteur (18) et/ou le deuxième capteur sont prévus pour la saisie directe de l'intensité de l'énergie agissant dans le frein de véhicule tracteur (17) ou, selon le cas, dans le frein de remorque (13).

3. Dispositif selon revendication 1, caractérisé par le fait que le premier capteur et/ou le deuxième capteur (8) sont agencés sur un dispositif de commande (ligne de commande (9)) servant à la détermination de l'intensité de l'énergie amenée au frein de véhicule tracteur ou, selon le cas, au frein de remorque (13).

4. Dispositif selon l'une des revendications précédentes, caractérisé par le fait que le dispositif comparateur (5) est conçu-réalisé de manière à n'être actif que si le signal d'énergie de remorque atteint une valeur prédéterminée.

5. Dispositif selon l'une des revendications précédentes, dans le cas où le véhicule tracteur (4) et la remorque (12) sont mutuellement liés, dans le sens de traction et dans le sens de poussée de la remorque (12), au moins par l'influence d'une force, caractérisé par le fait
   a) qu'il est prévu un capteur, ci-après appelé capteur de force (15), captant la force agissant dans le sens de la traction (Z) et dans le sens de la poussée (S) de la remorque (12), capteur dont le signal de force correspondant à la force est amené à un appareil de commande (16) conjugué à l'installation de freinage de remorque (7, 10, 11, 13, 15, 16);
   b) par le fait que la régulation de la décélération par freinage de la remorque s'effectue de façon que l'appareil de commande (16) commande l'intensité de l'énergie amenée au frein de remorque (13) de manière telle que le signal de force prenne une valeur prédéterminée ou ne sorte pas d'une plage de tolérance autour d'une telle valeur.

6. Dispositif selon l'une des revendications précédentes, caractérisé par le fait qu'un dispositif avertisseur optique ou acoustique (2), pouvant être commandé par le signal d'avertissement, est relié au dispositif comparateur (5).

7. Dispositif selon l'une des revendications précédentes, caractérisé par le fait qu'au dispositif comparateur (5) est relié un dispositif (6) de soulagement de frein qui est conçu-réalisé de façon telle que, lors de l'occurrence du signal d'avertissement, il commande l'amenée d'énergie au frein de remorque (13) de manière telle que l'intensité de l'énergie amenée au frein de remorque (13) soit limitée à une valeur maximale et/ou réduite en partant de la valeur existante.

8. Dispositif selon l'une des revendications précédentes, caractérisé par le fait qu'en tant qu'énergie la pression d'au moins un fluide de pression sert au moins dans le véhicule tracteur (4) ou dans la remorque (12).

9. Dispositif selon revendication 8, caractérisé par le fait qu'au moins de l'air comprimé sert de fluide de pression.

10. Dispositif selon revendication 8, caractérisé par le fait qu'au moins un fluide hydraulique sert de fluide de pression.

11. Dispositif selon l'une des revendications 9 ou 10, caractérisé par le fait qu'une combinaison d'air comprimé et de fluide hydraulique sert de fluide de pression.

12. Dispositif selon l'une des revendications précédentes, caractérisé par le fait que de l'énergie électrique sert d'énergie au moins dans le véhicule tracteur (4) ou dans la remorque (12).

13. Dispositif selon l'une des revendications précédentes, caractérisé par le fait que la force humaine sert d'énergie au moins dans le véhicule tracteur (4) ou dans la remorque (12).

14. Dispositif selon l'une des revendications précédentes, caractérisé par le fait qu'au moins le frein du véhicule tracteur (17) ou le frein de remorque (13) appartiennent à une installation de frein de marche du véhicule tracteur (4) ou, selon le cas, de la remorque (12).

15. Dispositif selon l'une des revendications précédentes, caractérisé par le fait qu'au moins le frein du véhicule tracteur (17) ou le frein de remorque (13) appartient à une installation de freinage de secours du véhicule tracteur (4) ou de la remorque (12).

16. Dispositif selon l'une des revendications précédentes, caractérisé par le fait que le frein du véhicule tracteur (17) appartient à une installation de freinage continu.

17. Dispositif selon revendication 16, caractérisé par le fait que l'installation de freinage continu est une installation de ralentisseur.

18. Dispositif selon revendication 16, caractérisé par le fait que l'installation de freinage continu est un ralentisseur à pression dynamique.

FIG. 1

EP 0 320 602 B1

12

FIG. 2